# EUROPÄISCHE PATENTSCHRIFT

(11) **EP 1 227 874 B1**
(45) Veröffentlichungstag und Bekanntmachung des Hinweises auf die Patenterteilung: **02.07.2003**
(21) Anmeldenummer: 00965993.9
(22) Anmeldetag: 13.09.2000
(51) Int. Cl.: B01D 53/34, B01D 53/38, F27B 1/06, C22B 1/20, B01D 53/70, B01D 53/86

(54) **VERFAHREN ZUM BEHANDELN VON GASEN AUS EINER SINTERANLAGE**
METHOD OF TREATING GASES ISSUED FROM A SINTERING PLANT
PROCEDE DE TRAITEMENT DES GAZ PROVENANT D'UNE INSTALLATION DE FRITTAGE

(30) Priorität: 13.09.1999 LU 90439
(43) Veröffentlichungstag der Anmeldung: 07.08.2002
(73) Patentinhaber: PAUL WURTH S.A., 1122 Luxembourg (LU)
(72) Erfinder: WEISSERT, Helmut, 44799 Bochum (DE); HEGEMANN, Karl-Rudolf, 45289 Essen (DE)
(74) Vertreter: Schmitt, Armand
(86) Internationale Anmeldenummer: EP0008950
(87) Internationale Veröffentlichungsnummer: WO01019497

(56) Entgegenhaltungen:
- EP-A- 0 567 964
- EP-A- 0 895 049
- EP-A- 0 908 222
- BE-A- 1 008 097
- DE-C- 4 431 939
- PATENT ABSTRACTS OF JAPAN vol. 009, no. 166 (C-290), 11. Juli 1985 (1985-07-11) & JP 60 039130 A (NIPPON KOKAN KK), 28. Februar 1985 (1985-02-28)

## Beschreibung

Die vorliegende Erfindung betrifft ein Verfahren zum Absaugen und Behandeln von Gasen aus einer Sinteranlage.

Sintern oder Agglomerieren nennt man das Stückigmachen der Feinerze für den Einsatz im Hochofen. In einer klassischen Sinteranlage wird eine Sintermischung, d.h. ein Feinerzmischung und ein Brennstoff, auf ein Sinterband, d.h. ein als Rost ausgebildetes Transportband, aufgegeben. Das Sinterband mit der aufgegebenen Mischung, auch noch Sinterbett genannt, überfährt eine größere Anzahl von Saugkästen. Über diese Saugkästen wird Luft durch das Sinterbett gesaugt. Ein Zündofen, der sich über dem ersten Saugkasten befindet, entzündet das Sintergemisch. Der Brand wandert beim Überfahren der weiteren Saugkästen von oben nach unten durch das Sinterbett hindurch. Beim Verbrennen erzeugt der beigemischte Brennstoff eine Temperatur die gerade ausreicht um das Feinerz an seiner Oberfläche zu erweichen, so daß die Feinerzmischung zu einem Sinterkuchen verbackt. Die beim Sintem erzeugten Verbrennungsgase werden mit der Verbrennungsluft über die Saugkästen abgesaugt. Üblicherweise sind die Sinteranlagen so ausgerüstet, daß die Saugkästen über ein Elektrofilter (z.T. auch Gewebefilter) an ein Gebläse angeschlossen sind, das den nötigen Unterdruck unter dem Sinterband erzeugt, um die benötige Verbrennungsluft durch das Sinterbett hindurchzusaugen. Vom Gebläse aus wird das gereinigte Gasgemisch dann über einen Kamin in die Atmosphäre geleitet.

Viele der heute in Betrieb befindlichen Sinteranlagen weisen große Umweltprobleme auf. Das unter dem Sinterband abgesaugte Gasgemisch weist in der Tat hohe Staub- und Schadstoffbelastungen auf. Das aus dem Kamin austretende Gasgemisch weist normalerweise Dioxinbelastungen von etwa 3-7 ng pro Nm³ auf. Zudem werden bei Verwendung von Elektrofiltem, aufgrund des ungünstigen Staubverhaltens bei Sinteranlagen, noch relativ hohe Staubkonzentrationen von über 100 mg/Nm³ bei älteren und unter 50 mg/Nm³ bei moderneren Anlagen erreicht.

Um die Dioxinproblematik zu lösen, wurden bis jetzt verschiedene Verfahren eingesetzt.

So wurde z.B. hinter dem Elektrofilter ein Katalysator eingesetzt, welcher sich bereits bei Müllverbrennungsanlagen für die Dioxinabscheidung bewährt hat. In den Müllverbrennungsanlagen zerstört dieser Katalysator das Dioxin rückstandsfrei. Beim Betrieb eines solchen Katalysators in einer Sinteranlage hat sich jedoch herausgestellt, daß die Dioxinzerstörung im Katalysator oft gestört ist und zum Teil gar nicht abläuft. Dies ist vor allem auf die niedrigen Gastemperaturen (von z.T. unter 100°C) zurückzuführen.

In einem anderen Verfahren werden hinter dem Elektrofilter Aktivkohle oder Herdofenkoks zusammen mit Kalziumhydroxid in den Abgasstrom eingedüst. Die Aktivkohle bindet dabei das Dioxin, das Kalziumhydroxid ist zur Inertisierung des Prozesses erforderlich. Aufgrund der hohen Reaktivität der Aktivkohle / des Herdofenkoks besteht ansonsten Brandgefahr. Hinter der Eindüsestrecke befindet sich ein Gewebefilter, in dem zum einen die eingedüsten, mit Dioxin belasteten Stoffe wieder abgeschieden werden und zum anderen die meist noch recht hohen Staubkonzentrationen hinter dem Elektrofilter noch deutlich reduziert werden. Problematisch erweist sich die Verteilung der Aktivkohle / des Herdofenkoks, da in Bereichen der Überdosierung erhöhte Brandgefahr und in Bereichen niedriger Konzentration keine ausreichende Dioxinabscheidung erzielt wird. Des weiteren wird im Filter ein stark dioxinkontaminiertes Produkt gebildet, das weiterverarbeitet werden muß (zum Beispiel durch Rückführung in die Sinteranlage). Ein Großteil des Filterstaubes wird zur Einblasstelle zurückgeführt, um die Aktivkohle / den Herdofenkoks mehrfach zu nutzen. Nur ein kleiner Teilstrom wird ausgeschleust und z.B. zur Sinteranlageaufgabe zurückgeführt.

Nach einem weiteren Verfahren, wird Aktivkohle / Herdofenkoks direkt in den Elektrofilter eingeblasen. Es gibt jedoch große Zweifel daran, ob mit dieser Maßnahme die Dioxinabscheidung in dem gewünschten Maße erreicht werden kann und ob, durch die zusätzliche Staubbelastung, der Elektrofilter nicht noch höhere Staubdurchlässe aufweist. Zudem werden wesentlich höhere Aktivkohle- / Herdofenkoksmengen benötigt als beim vorhergehenden Verfahren. Es besteht ebenfalls das Problem der Entsorgung des Elektrofiltermaterials.

Aus der EP 0895049 ist eine Sinteranlage bekannt, die in eine erste und eine zweite Zone unterteilt ist. In der ersten Zone erwärmt sich das Sintergut lediglich auf eine niedrigere Temperatur, in der zweiten Zone hingegen auf eine höhere Temperatur. Entlang der Sinterstrecke ist eine Vielzahl von Abzugsleitungen angeordnet, welche die Gase durch das Sinterbett abziehen. Die Gase aus der zweiten Zone werden hierbei in einem Dioxin-Katalysator zwecks Verringerung von Dioxinen behandelt. Die Gase aus der ersten Zone werden unbehandelt abgesaugt, bzw. in einem Dioxin Adsorber behandelt.

Ein Sinterverfahren mit einer getrennter Behandlung der Gase aus der "heißen Zone" und der "kalten Zone" des Sinterbetts ist ebenfalls aus der DE 4431939 bekannt. Dem Sinterbett werden hierbei schadstoffadsorbierende Mittel beigegeben, welche die Schadstoffe zunächst im Sinterbett zurückhalten und erst in der "warmen Zone" freigeben sollen, so dass nur eine geringe Teilmenge des gesamten Gasvolumens von Schadstoffen gereinigt werden muß. Hierbei kann die hohe Abgastemperatur zur katalytischen Reinigung ausgenutzt werden.

Aufgabe der vorliegenden Erfindung ist es, die aus der EP 0895049 bekannte Dioxinabscheidung im Katalysator noch weiter zu verbessern.

Diese Aufgabe wird erfindungsgemäß durch ein Verfahren nach Anspruch 1 gelöst.

In einer Sinteranlage ist die Temperatur im Sinterbett vom Zündbereich bis etwa zur Mitte der Anlage relativ niedrig. Erst ab Mitte der Anlage steigt die Temperatur im Sinterbett deutlich an. Man kann in der Sinteranlage also zwischen einer kalten und heißen Zone unterscheiden. Die Gase aus der kalten Zone und die Gase aus der heißen Zone der Sinteranlage werden als getrennte Teilströme abgesaugt und behandelt. Dioxinmessungen an bestehenden Sinteranlagen haben in der Tat ergeben, daß in der kalten Zone nur sehr geringe Dioxinmengen erzeugt werden. Der aus der kalten Zone separat abgesaugte Teilstrom weist also nur eine äußerst geringe Dioxinbelastung auf und braucht nicht einer Behandlung zur Reduktion des Dioxingehalts unterzogen zu werden. Größere Mengen an Dioxin werden erst in den Abgasen aus der heißen Zone freigesetzt und mit dem Teilstrom aus der heißen Zone abgesaugt. Wie in der Anlage aus der EP 0895049 erfolgt die Reduzierung des Dioxingehalts des Teilstroms aus der heißen Zone der Sinteranlage in einem Dioxin-Katalysator. Es kann z.B. ein Katalysator benutzt werden, der bei Müllverbrennungsanlagen sehr gute Dioxinabscheidungen ermöglicht. Erfindungsgemäß wird dieser Teilstrom vor dem Katalysator zusätzlich aufgeheizt, und zwar durch Verbrennen von dem in diesem Teilstrom enthaltenen CO-Gas in einem CO-Katalysator. Hierdurch wird eine noch höhere Gastemperatur erreicht, was die Dioxinabscheidung im Katalysator noch weiter verbessert.

Der Teilstrom aus der kalten Zone der Sinteranlage wird vorteilhaft lediglich entstaubt. Da nur sehr geringe Dioxinmengen in dem aus der kalten Zone stammende Teilstrom vorhanden sind, ist es z.B. nicht erforderlich diesen Teilstrom einer Behandlung zur Reduzierung des Dioxingehalts zu unterziehen.

Die Entstaubung des Teilstroms aus der kalten Zone der Sinteranlage erfolgt vorzugsweise in einem oder mehreren Elektrofiltern. Durch eine in der kalten Zone befindlichen höhere H₂O Konzentration, durch die geringere Abgastemperatur und durch eine sehr viel geringere Gasmenge kann die Staubabscheidung in Elektrofiltern deutlich verbessert werden.

Der Teilstrom aus der heißen Zone der Sinteranlage wird vorteilhaft zuerst entstaubt und anschließend der Behandlung zwecks Reduzierung des Dioxingehalts unterzogen. Die Entstaubung des Teilstroms aus der heißen Zone der Sinteranlage erfolgt vorzugsweise in einem Gewebefilter, bzw. Tuchfilter, der besonders wirkungsvoll bei feinen Stäuben in relativ trocknen Gasgemischen ist.

Der Teilstrom aus der heißen Zone der Sinteranlage wird vorzugsweise zusätzlich einer Behandlung zwecks Reduzierung des NOₓ Gehalts unterzogen. Diese Behandlung zwecks Reduzierung des NOₓ Gehalts umfaßt vorteilhaft ein Eindüsen von NH₃ in den Teilstrom aus der heißen Zone der Sinteranlage. Bei den Temperaturen des Teilstroms aus der heißen Zone reagiert NOₓ in der Tat gut mit NH₃.

Vorzugsweise weist der Teilstrom aus der heißen Zone eine Mischtemperatur von über 200°C und der Teilstrom aus der kalten Zone eine Mischtemperatur von unter 100°C auf. In der Tat, bei Temperaturen von über 200°C sollte der Katalysator das Dioxin rückstandsfrei zerstören können, und bei Temperaturen von unter 100°C sollte der Dioxingehalt im Abgas der Sinteranlage vernachlässigbar sein.

Der Dioxingehalt im Teilstrom aus der kalten Zone ist vorzugsweise kleiner als 0,5 ng/Nm³.

Unter Standardbedingungen (P = 1 bar, T = 273.15 K) sind die beiden Teilströme vorzugsweise ungefähr gleich groß.

Im folgenden wird nun eine Ausgestaltung der Erfindung anhand der beiliegenden Figuren beschrieben. Es zeigen:
- Fig.1:: eine schematische Seitenansicht einer Sinteranlage
- Fig.2:: eine schematische Draufsicht auf eine Sinteranlage

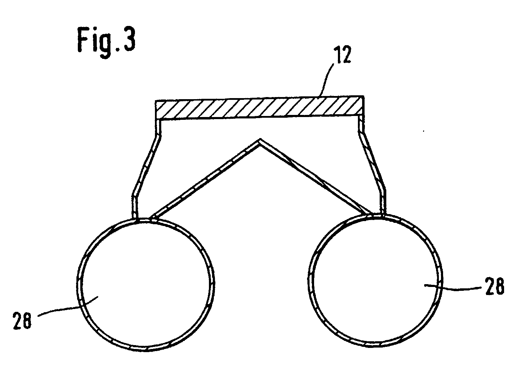

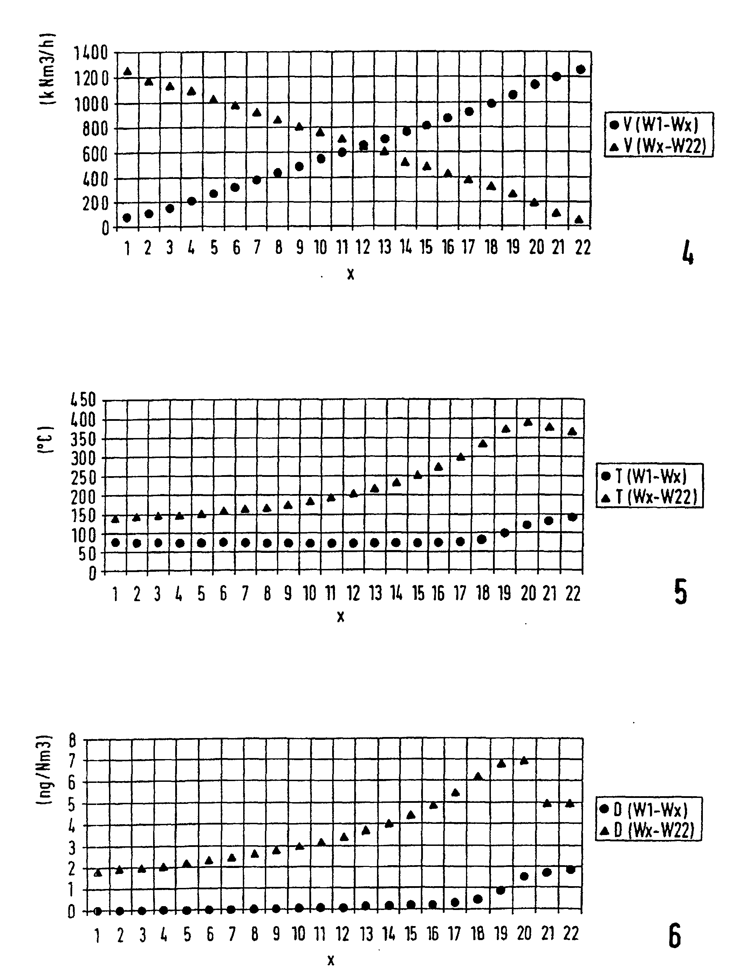

- Fig.3:: einen Schnitt A-A durch die in Fig.2 dargestellte Sinteranlage
- Fig.4:: eine Grafik des Volumendurchflusses der Abgase beider Zonen
- Fig.5:: eine Grafik der Temperatur der Abgase beider Zonen
- Fig.6:: eine Grafik des Dioxingehalts der Abgase beider Zonen

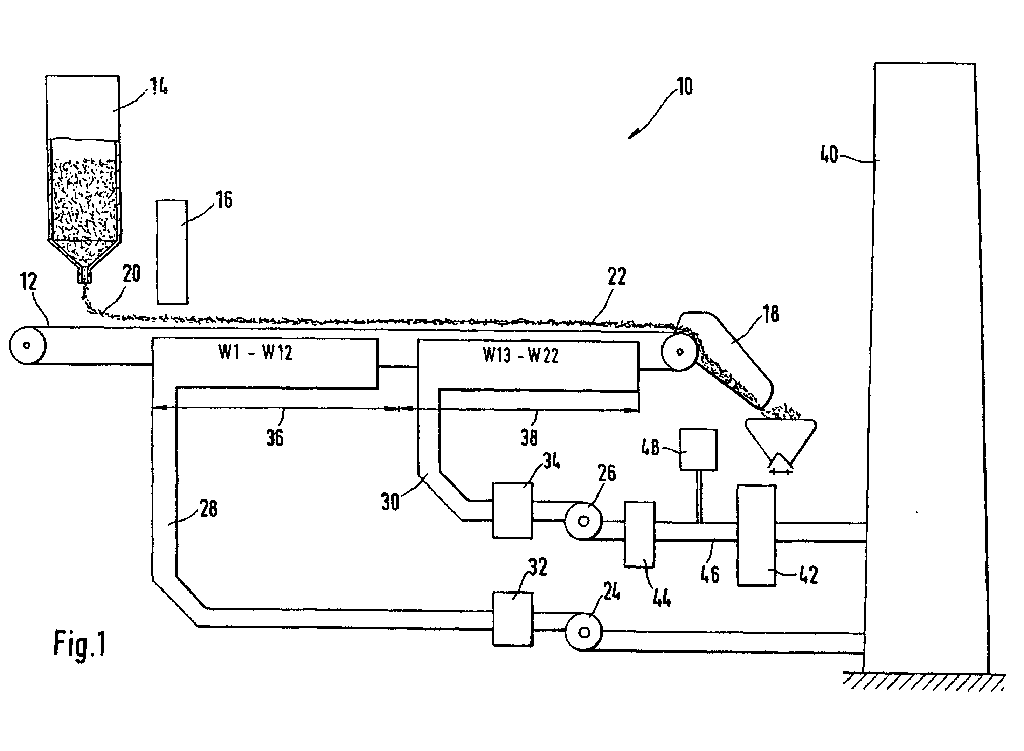

Fig.1 zeigt eine Sinteranlage 10 mit einem Sinterband 12, einem Bunker 14, einem Zündofen 16, einem Abwurf 18 und mehreren Saugkästen W1-W22. Eine Sintermischung 20, d.h. ein Feinerzmischung und ein Brennstoff, wird vom Bunker 14 auf das Sinterband 12, d.h. ein als Rost ausgebildetes Transportband, aufgegeben. Das Sinterband 12 transportiert die aufgegebene Sintermischung 20, auch noch Sinterbett genannt, über die Saugkästen W1-W22 bis zum Abwurf 18. Über diese Saugkästen W1-W22 wird Luft durch das Sinterbett gesaugt. Der Zündofen 16, der sich über dem ersten Saugkasten W1 befindet, entzündet die Sintermischung 20. Der Brand wandert beim Überfahren der weiteren Saugkästen W2-W22 langsam von oben nach unten durch die ganze Sinterschicht hindurch. Beim Verbrennen erzeugt der beigemischte Brennstoff eine Temperatur die gerade ausreicht um das Feinerz an seiner Oberfläche zu erweichen, so daß die Sintermischung zu einem Sinterkuchen 22 verbackt. Die beim Sintern erzeugten Verbrennungsgase werden mit der Verbrennungsluft über die Saugkästen W1-W22 abgesaugt.

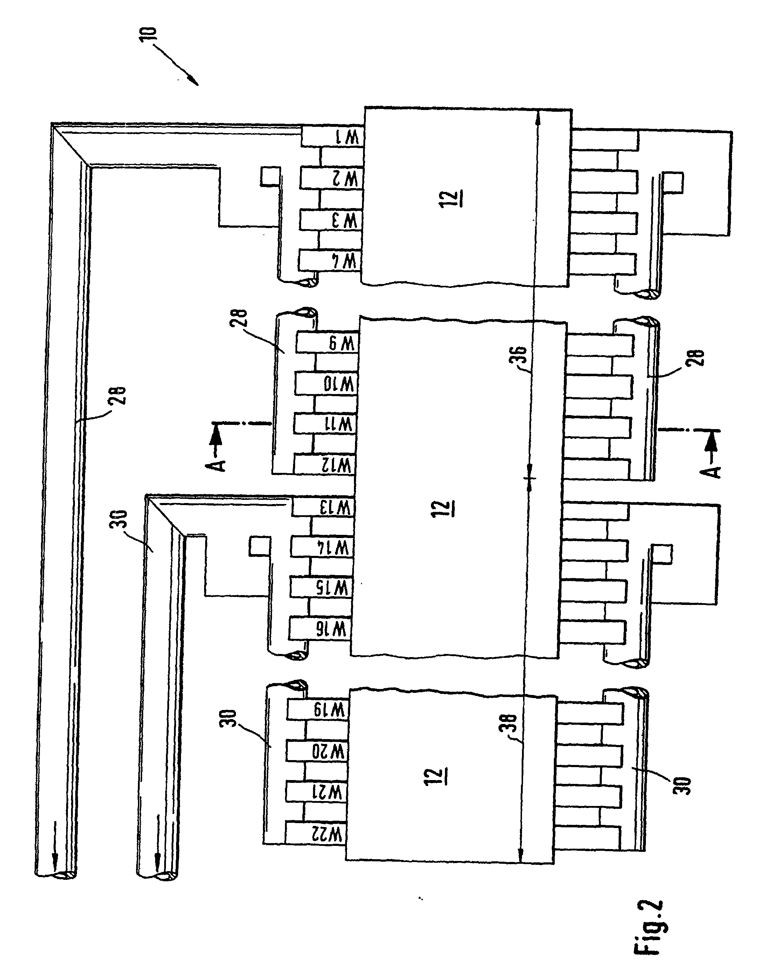

In der in Fig.1 und Fig.2 gezeigten Ausgestaltung einer Sinteranlage 10 werden die Abgase als zwei getrennte Teilströme abgesaugt und behandelt. Die Saugkästen W1-W22 sind hierzu in zwei getrennte Gruppen aufgeteilt. Eine erste Gruppe umfaßt die Saugkästen W1-W12, welche einer sogenannten kalten Zone 36 der Sinteranlage zugeordnet sind. Eine zweite Gruppe umfaßt die Saugkästen W13-W22, welche einer sogenannten heißen Zone 38 der Sinteranlage zugeordnet sind.

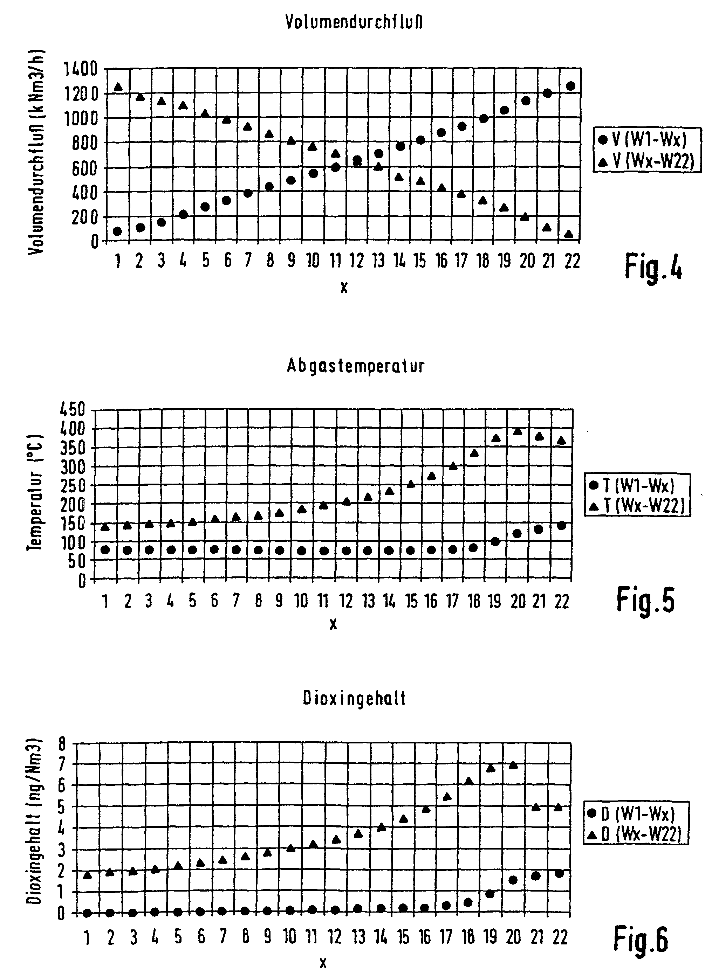

In den Figuren 4-6 sind jeweils die Mittelwerte von Größe (Volumenfluß), Temperatur und Dioxingehalt für die beiden Teilströme für unterschiedliche Aufteilungen der Saugkästen W1-W22 zwischen den beiden Gruppen dargestellt. Die Werte für den Teilstrom aus der ersten Gruppe sind mit Punkten dargestellt und sind jeweils unter der Ordnungszahl x des letzten Saugkastens der ersten Gruppe eingetragen. Die Werte für den Teilstrom aus der zweiten Gruppe sind mit Dreiecken dargestellt und sind jeweils unter der Ordnungszahl x des Saugkastens der zweiten Gruppe eingetragen.

### Beispiel:

Bei einer Aufteilung der Saugkästen zwischen einer ersten Gruppe W1-W12 und einer zweiten Gruppe W13-W22, sind die Werte für den Teilstrom aus der ersten Gruppe über der Abszisse 12 jeweils mit einem Punkt angegeben, und die Werte für den Teilstrom aus der zweiten Gruppe oberhalb Abszisse 13 jeweils mit einem Dreieck angegeben. Fig.4 zeigt die Größe der beiden Teilströme in kNm³/h, also unter Standardbedingungen. Man sieht, daß bei einer Trennung zwischen den Saugkästen W12 und W13 die beiden Teilströme ungefähr gleich groß sind. In anderen Worten, der Teilstrom aus der kalten Zone und der Teilstrom aus der heißen Zone haben bei der oben festgelegten Grenze zwischen der kalten und der heißen Zone im wesentlichen die gleiche Größe unter Standardbedingungen.

Die Fig.5 zeigt die Temperatur der beiden Teilströme in °C. Man sieht, daß bei einer Trennung zwischen den Saugkästen W12 und W13 die Temperatur des Teilstroms aus der kalten Zone 73°C ist (siehe Abszisse 12), während die Temperatur des Teilstroms aus der heißen Zone 220°C beträgt (siehe Abszisse 13), also bedeutend höher ist. Erfolgt, wie bei den bis jetzt bekannten Anlagen, keine Trennung der Abgase in zwei Teilströme, beträgt die Temperatur des Gesamtstroms ungefähr 140°C (siehe Abszisse 1 oder 22). Bei einer Trennung zwischen den Saugkästen W12 und W13, ist die Temperatur des Teilstroms aus der heißen Zone folglich um ungefähr 80°C höher.

Die Fig.6 zeigt den Dioxingehalt der beiden Teilströme in ng bezogen auf einen Nm³ Gas. Man sieht, daß bei einer Trennung zwischen den Saugkästen W12 und W13 der Dioxingehalt des Teilstroms aus der kalten Zone 0.10 ng/Nm³ ist (siehe Abszisse 12), während der Dioxingehalt des Teilstroms aus der heißen Zone 3.74 ng/Nm³ beträgt (siehe Abszisse 13), also bedeutend höher ist. In anderen Worten, der Dioxingehalt im Teilstrom aus der kalten Zone ist vernachlässigbar und stellt keine Probleme für die Umwelt dar.

Die Saugkästen W1-W12 sind mittels einer Saugleitung 28 mit einem Gebläse 24 verbunden, das den Teilstrom aus der kalten Zone 36 abzieht. Vor dem Gebläse 24 befindet sich ein Elektrofilter 32, welcher den Teilstrom aus der kalten Zone entstaubt. Letzterer gelangt anschließend über einen Kamin 40 in die Atmosphäre. Der Teilstrom aus der kalten Zone 36 hat einen minimalen Dioxingehalt (0.10 ng/Nm³), so daß eine Behandlung zur Reduzierung des Dioxingehalts nicht nötig ist.

Die Saugkästen W13-W22 sind mittels einer Saugleitung 30 mit einem getrennten Gebläse 26 verbunden, das den Teilstrom aus der heißen Zone 38 abzieht. Vor dem Gebläse 26 befindet sich ein Gewebefilter 34, welcher den Teilstrom aus der heißen Zone 38 entstaubt. Da der Teilstrom aus der heißen Zone 38 einen relativ hohen Dioxingehalt (3.74ng/Nm³) hat, muß dieser Teilstrom einer Behandlung zur Reduzierung des Dioxingehalts in einem Katalysator 42 unterzogen werden. Durch die hohe Temperatur der von der heißen Zone 38 stammenden Abgase (Mittelwert der Temperatur: 220°C), wird eine sehr gute, rückstandsfreie Dioxinabscheidung im Katalysator 42 ermöglicht. Der Teilstrom aus der heißen Zone 38 kann nun über den Kamin 40 in die Atmosphäre gelangen.

Die Dioxinabscheidung im Katalysator 42 wird durch eine zusätzliche Aufheizung des Teilstroms aus der heißen Zone 38 noch weiter verbessert. Hierzu wird in einem vorgeschalteten CO-Katalysator 44 das im Teilstrom enthaltene CO-Gas verbrannt.

Neben der Dioxinabscheidung kann gleichzeitig auch noch eine NOₓ-Abscheidung vorgenommen werden. Hierzu wird in einen Kanal 46 vor dem Katalysator 42 NH₃ 48 in den Teilstrom aus der heißen Zone 38 eingespritzt. Bei den hohen Temperaturen dieses Teilstroms reagiert NOₓ ausgezeichnet mit NH₃.

Dadurch, daß die Gase aus der kalten Zone 36 der Sinteranlage und die Gase aus der heißen Zone 38 der Sinteranlage als getrennte Teilströme abgesaugt und behandelt werden, können sowohl die Staub- als auch die Dioxin- und NOₓ-emissionen der Anlage mit geringem Aufwand, großer Wirtschaftlichkeit und augezeichnetem Wirkungsgrad deutlich verringert werden.

## Patentansprüche

1. Verfahren zum Behandeln von Gasen welche in einer Sinteranlage (10) durch ein Sinterbett (20) abgesaugt werden; wobei man zwischen einer kalten Zone (36) der Sinteranlage, mit relativ niedrigen Gastemperaturen, und einer heißen Zone (38) der Sinteranlage, mit wesentlich höheren Gastemperaturen, unterscheiden kann; umfassend eine getrennte Absaugung und Behandlung der Gase aus der kalten Zone (36) der Sinteranlage und der Gase aus der heißen Zone (38) der Sinteranlage, wobei die Behandlung des Teilstroms aus der heißen Zone (38) der Sinteranlage eine Behandlung in einem Katalysator (42) zwecks Reduzierung der vorhandenen Kohlenwasserstoffe, insbesondere der Dioxine und Furane, aufweist,
**dadurch gekennzeichnet, dass** vor der Behandlung in dem Katalysator (42), der Teilstrom aus der heißen Zone (38) der Sinteranlage (10) in einem CO-Katalysator (44), durch Verbrennen von dem in diesem Teilstrom enthaltenen CO-Gas, weiter aufgeheizt wird.

2. Verfahren nach Anspruch 1, **dadurch gekennzeichnet, daß** der Teilstrom aus der kalten Zone (36) der Sinteranlage lediglich entstaubt wird.

3. Verfahren nach Anspruch 1 oder 2, **dadurch gekennzeichnet, daß** der Teilstrom aus der kalten Zone (36) der Sinteranlage in einem oder mehreren elektrischen oder filtemden Abscheider (32) entstaubt wird.

4. Verfahren nach einem der Ansprüche 1 bis 3, **dadurch gekennzeichnet, daß** der Teilstrom aus der heißen Zone (38) der Sinteranlage zuerst entstaubt wird, bevor er in den CO-Katalysator eingeleitet wird.

5. Verfahren nach Anspruch 4, **dadurch gekennzeichnet, daß** die Entstaubung des Teilstroms aus der heißen Zone (38) der Sinteranlage in einem elektrischen oder filternden Abscheider (34) erfolgt.

6. Verfahren nach einem der Ansprüche 1 bis 5, **dadurch gekennzeichnet, daß** am Teilstrom aus der heißen Zone (38) der Sinteranlage zusätzlich eine Behandlung zwecks Reduzierung des NOₓ Gehalts vorgenommen wird.

7. Verfahren nach Anspruch 6, **dadurch gekennzeichnet, daß** die Behandlung zwecks Reduzierung des NOₓ Gehalts ein Eindüsen von NH₃ in den Teilstrom aus der heißen Zone (38) der Sinteranlage umfaßt.

8. Verfahren nach einem der Ansprüche 1 bis 7, **dadurch gekennzeichnet, daß** der Teilstrom aus der heißen Zone (38) eine Mischtemperatur von über 180°C und der Teilstrom aus der kalten Zone (36) eine Mischtemperatur von unter 100°C aufweist.

9. Verfahren nach einem der Ansprüche 1 bis 8, **dadurch gekennzeichnet, daß** der Dioxin- und Furangehalt im Teilstrom aus der kalten Zone (36) kleiner als 0,5 ng/Nm³ ist.

10. Verfahren nach einem der Ansprüche 1 bis 9, **dadurch gekennzeichnet, daß** die beiden Teilströme unter Standardbedingungen ungefähr gleich groß sind.

11. Verfahren nach einem der Ansprüche 1 bis 10, **dadurch gekennzeichnet, daß** im Teilstrom aus der heißen Zone (38) ein Gebläse (26) hinter dem elektrischen oder filtemden Abscheider (34) und vor dem CO-Katalysator (44) angeordnet ist.

## Claims

1. Process for treatment of gases which are exhausted through a sinter bed (20) in a sintering plant (10), wherein a distinction can be made between a cold zone (36) of the sintering plant with relatively low gas temperatures and a hot zone (38) of the sintering plant with substantially higher gas temperatures; comprising a separate exhaustion and treatment of the gases from the cold zone (36) of the sintering plant and the gases from the hot zone (38) of the sintering plant, the treatment of the partial flow of the hot zone (38) of the sintering plant comprising a treatment in a catalyzer (42) for reducing the present hydrocarbons, in particular the dioxins and furanes,
**characterized in that** before the treatment in the catalyzer (42), the partial flow from the hot zone (38) of the sintering plant (10) in a CO catalyzer (44) is further heated by burning the CO gas contained in this partial flow.

2. Process according to claim 1, **characterized in that** the partial flow from the cold zone (36) of the sintering plant undergoes only dust removal treatment.

3. Process according to claim 1 or 2, **characterized in that** dust is removed from the partial flow from the cold zone (36) of the sintering plant in one or more electric or filtering separators (32).

4. Process according to one of claims 1 to 3, **characterized in that** the partial flow from the hot zone (38) of the sintering plant first undergoes dust removal before it is introduced into the CO catalyzer.

5. Process according to claim 4, **characterized in that** the dust removal from the partial flow from the hot zone (38) of the sintering plant takes place in an electric or filtering separator (34).

6. Process according to one of claims 1 to 5, **characterized in that** the partial flow from the hot zone (38) of the sintering plant is additionally treated to reduce the NOx content.

7. Process according to claim 6, **characterized in that** the treatment to reduce the NOx content comprises injection of NH3 into the partial flow from the hot zone (38) of the sintering plant.

8. Process according to one of claims 1 to 7, **characterized in that** the partial flow from the hot zone (38) has a mixing temperature of more than 180°C and the partial flow from the cold zone (36) a mixing temperature of less than 100°C.

9. Process according to one of claims 1 to 8, **characterized in that** the dioxin and furan content in the partial flow from the cold zone (36) is less than 0.5 ng/m³ N.T.P.

10. Process according to one of claims 1 to 9, **characterized in that** the two partial flows are approximately the same size under standard conditions.

11. Process according to one of claims 1 to 10, **characterized in that** in the partial flow from the hot zone (38) a fan (26) is arranged behind the electric or filtering separator (34) and in front of the CO catalyzer (44).

## Revendications

1. Procédé de traitement des gaz aspirés à travers un lit de frittage (20) dans une installation d'agglomération par frittage (10), dans lequel il est possible de distinguer entre une zone froide (36) de l'installation de frittage, avec des températures relativement basses des gaz, et une zone chaude (38) de l'installation de frittage, avec des températures des gaz nettement plus élevées, comprenant une aspiration et un traitement séparés des gaz en provenance de la zone froide (36) de l'installation de frittage et des gaz en provenance de la zone chaude (38) de l'installation de frittage, le traitement du courant partiel en provenance de la zone chaude (38) de l'installation de frittage comportant un traitement dans un catalyseur (42) dans le but de réduire les hydrocarbures présents, notamment les dioxines et les furanes,
**caractérisé en ce que** avant le traitement dans le catalyseur (42), le chauffage du courant partiel en provenance de la zone chaude (38) de l'installation de frittage (10) se poursuit dans un catalyseur à CO (44) par combustion du gaz CO contenu dans ce courant partiel.

2. Procédé selon la revendication 1, **caractérisé en ce que** le courant partiel en provenance de la zone froide (36) de l'installation de frittage est simplement dépoussiéré.

3. Procédé selon la revendication 1 ou 2, **caractérisé en ce que** le courant partiel en provenance de la zone froide (36) de l'installation de frittage est dépoussiéré dans un ou plusieurs séparateurs (32) électriques ou filtrants.

4. Procédé selon l'une des revendications 1 à 3, **caractérisé en ce que** le courant partiel en provenance de la zone chaude (38) de l'installation de frittage est d'abord aspiré avant d'être envoyé dans le catalyseur à CO.

5. Procédé selon la revendication 4, **caractérisé en ce que** le dépoussiérage du courant partiel en provenance de la zone chaude (38) de l'installation de frittage s'effectue dans un séparateur (34) électrique ou filtrant.

6. Procédé selon l'une des revendications 1 à 5, **caractérisé en ce que** un traitement supplémentaire est effectué sur le courant partiel en provenance de la zone chaude (38) de l'installation de frittage dans le but de réduire la teneur en NOₓ.

7. Procédé selon la revendication 6, **caractérisé en ce que** le traitement effectué en vue de réduire la teneur en NOₓ comprend une injection de NH₃ dans le courant partiel en provenance de la zone chaude (38) de l'installation de frittage.

8. Procédé selon l'une des revendications 1 à 7, **caractérisé en ce que** le courant partiel en provenance de la zone chaude (38) présente une température de mélange supérieure à 180 °C et que le courant partiel en provenance de la zone froide (36) présente une température de mélange inférieure à 100 °C.

9. Procédé selon l'une des revendications 1 à 8, **caractérisé en ce que** la teneur en dioxine et en furane dans le courant partiel en provenance de la zone froide (36) est inférieure à 0,5 ng/Nm³.

10. Procédé selon l'une des revendications 1 à 9, **caractérisé en ce que** les deux courants partiels sont de taille approximativement équivalente sous conditions standard.

11. Procédé selon l'une des revendications 1 à 10, **caractérisé en ce que** dans le courant partiel en provenance de la zone chaude (38) un ventilateur (26) est disposé en aval du séparateur (34) électrique ou filtrant et en amont du catalyseur à CO (44).
